# EUROPÄISCHE PATENTANMELDUNG

(11) **EP 4 512 623 A1**
(43) Veröffentlichungstag der Anmeldung: **26.02.2025**
(21) Anmeldenummer: 24195395.9
(22) Anmeldetag: 20.08.2024
(51) Int. Cl.: B41J 2/17

(54) **TEMPERIERVORRICHTUNG UND VERFAHREN ZUM TEMPERIEREN VON TINTE FÜR EINEN TINTENDRUCKER**

(30) Priorität: 24.08.2023 DE 102023122685
(71) Anmelder: Canon Production Printing Holding B.V., 5914 HH Venlo (NL)
(72) Erfinder: HITZLSPERGER, Florian, 5914 HH VENLO (NL); RUMMELSBERGER, Christoph, 5914 HH VENLO (NL); STÖCKLE, Ulrich, 5914 HH VENLO (NL); VAN DER BOS, Arjan, 5914 HH VENLO (NL); COX, Jeroen, 5914 HH VENLO (NL)
(74) Vertreter: Canon Production Printing IP Department

(57) **Zusammenfassung**

Eine Temperiervorrichtung (10) weist eine Warmfluidquelle (12) und eine Kaltfluidquelle (14) auf mit unterschiedlichen Temperaturniveaus. Die beiden Temperierfluide werden einem Mischer (22) zugeführt, der aus den beiden Temperierfluiden unterschiedlicher Temperaturen mithilfe einer Regeleinrichtung ein Gemisch mit gewünschter Temperatur mischt. Das Gemisch wird einem Wärmetauscher (26) zugeführt. Im Wärmetauscher (26) wird die Wärme des Gemischfluids auf die Tinte übertragen, um die Tinte zu temperieren. Die gewünschte Solltemperatur der Tinte wird dadurch geregelt, dass die Tintentemperatur nach dem Wärmetauscher (26) gemessen und als Istwert zurück zum Mischer (22) gekoppelt wird und dadurch die Gemischtemperatur gegebenenfalls geändert wird. Die so temperierte Tinte wird einer Druckeinheit (40) des Tintendruckers zum Bedrucken eines Bedruckstoffs zugeführt.

## Beschreibung

Die Erfindung betrifft eine Temperiervorrichtung zum Temperieren von Tinte für einen Tintendrucker hoher Druckleistung. Ferner betrifft die Erfindung ein Verfahren zum Temperieren von Tinte für einen Tintendrucker hoher Druckleistung.

Zum ein- oder mehrfarbigen Bedrucken eines Aufzeichnungsträgers aus verschiedensten Materialien, z.B. Papier, können Tintendrucker eingesetzt werden. Der Aufbau solcher Tintendruckgeräte ist hinreichend bekannt. Insbesondere sind digitale Hochgeschwindigkeits-Tintendrucker bekannt, bei denen Tintentropfen zum Erzeugen eines Druckbilds aus Düsen eines Druckkopfs einer Druckeinheit auf einen schnell bewegten Aufzeichnungsträger ausgestoßen werden.

Solche Hochleistung-Tintendrucker sollten mit hoher Druckqualität drucken können. Am Aufstellungsort des Tintendruckers können durchaus unterschiedliche Umgebungstemperaturen herrschen, die sich auch während des Betriebs durchaus ändern können. So kann die Umgebungstemperatur am Ort des Tintendruckers durchaus zwischen 15° und 45° C liegen, die möglicherweise die Bestandteile des Tintendruckers, wie z.B. die Tinte beeinflussen und damit die Druckqualität negativ beeinträchtigen können. Für eine hohe Druckqualität besteht die Notwendigkeit, die Tinte auf einem entsprechend notwendigen Betriebstemperaturniveau zu halten, wobei nur kleine Temperaturschwankungen innerhalb eines engen Toleranzbereich von beispielsweise ± 1° C um die gewünschte Betriebstemperatur der Tinte herum tolerierbar sein sollen.

Aus der Offenlegungsschrift DE 10 2007 043 644 A1 ist ein Temperiergerät für Druckmaschinen bekannt, das zum Temperieren bestimmter Teile oder Fluide einer Rotationsdruckmaschine dient. Hierbei ist je ein Temperaturmittelkreislauf für Kaltwasser und Warmwasser vorgesehen, deren Temperaturen unabhängig voneinander steuer- und/oder regelbar sind. Um bestimmt Teile der Maschine mit einer Flüssigkeit zu temperieren, werden Warmwasser und Kaltwasser entsprechend gemischt, bis die gewünschte Temperatur erreicht ist. Dann wird das temperierte Gemisch in einen Verbraucherkreislauf direkt zu den entsprechenden Teilen geleitet, um diese zu kühlen oder vorzuwärmen. Nicht verbrauchte Flüssigkeit wird jeweils über einen Rücklauf zu entsprechenden Flüssigkeitsspeichern der beiden Temperierkreisläufe zurückgeführt.

Statt der hydraulischen Mischung der beiden Temperiermittelkreisläufe kann auch ein Wärmetauscher mit dem Verbraucherkreislauf der Druckmaschine in Verbindung stehen, wodurch die Kreislaufläufe gegeneinander hydraulisch getrennt sind. Somit steht der Kaltwasserkreislauf als Feuchtmittel unmittelbar mit den zu kühlenden Teilen in direktem Kontakt. Das kühle Feuchtmittel wird dann direkt auf Walzen der Druckmaschine zum Kühlen aufgesprüht.

Aus der Patentschrift EP 1 870 238 B1 ist eine Kühleinrichtung für Walzen oder Druckwerkszylinder für eine Druckmaschine bekannt. Ein zu temperierender Kreislauf wird aus zwei Kreisen unterschiedlicher Temperatur gespeist abhängig von der Außentemperatur. Somit können Walzen oder Druckzylinder unter die Umgebung- bzw. Außentemperatur abgekühlt werden. Ein Wärmetauscher kann thermisch an einen Versorgungskreislauf für die Zufuhr von Temperiermittel des gewünschten Temperaturniveaus direkt mit dem zu temperierenden Bauteil gekoppelt werden. Zudem ist eine Mischung aus beiden als Temperaturmittel auf ein gewünschtes Temperaturniveau einspeisbar. Somit können sämtliche temperierende Druckwerkszylinder, Walzen, etc. in der Druckmaschine durch unmittelbaren Kontakt gekühlt werden. Die Einrichtung weist auch Wärmerückgewinnungsmittel auf, durch die Energie aus Wärmeströmen zu Heizzwecken für den Temperiermittelspeicher zurückgewonnen werden kann.

Bei den bekannten Temperiergeräten werden Bauteile der Druckmaschinen direkt durch eine Gemisch aus dem Kühlmittel und dem Wärmemittel temperiert, indem sie mit dem Gemisch in Kontakt kommen. Dabei kann es passieren, dass die Teile zu heiß oder zu kalt werden, insbesondere wenn ein Kühl-/Wärme-Aggregat ausfallen sollte. Tinte könnte mit solch einer Einrichtung nicht temperiert werden, da die Tinte mit dem Kühlmittel verwässert würde und nicht mehr brauchbar wäre.

Wird Tinte beispielsweise mit Heiß- oder Kaltleitern gekühlt oder erhitzt, so kann dies dazu führen, dass die sehr empfindliche Tinte über ihre maximal zulässige Temperatur hinaus erhitzt wird (bei der flüchtige Stoffe der Tinte verdampfen) oder gefriert (Viskosität kann zu hoch werden) im Falle einer Fehlfunktion. Da die neuesten Tinten sehr temperaturempfindlich sind, sollten diese nie über 45° C erwärmt werden. Denn bei solch hohen Temperaturen verflüchtigen sich bereits wichtige Bestandteile der Tinte. Auch sollten keine lokalen Temperaturüberhöhungen (Hotspots) mit elektronischen Heizelementen erzeugt werden, da dann die Tinte unbrauchbar wird oder zumindest ein deutlich verschlechtertes Druckbild liefern würde und das Druckbild zumindest stellenweise stark beeinträchtigt wäre.

Es ist Aufgabe der Erfindung, eine Temperiervorrichtung und ein Verfahren zum Temperieren von Tinte für einen Tintendrucker zu schaffen, bei denen die zu verdruckende Tinte auf einer möglichst gleichbleibenden und spezifizierten Temperatur während des Druckens gehalten werden soll.

Diese Aufgabe wird für einen Temperiervorrichtung durch die Merkmale des Anspruchs 1 und für ein Verfahren durch die Merkmale des Anspruchs 10 gelöst.

So weist die Temperiervorrichtung eine Warmfluidquelle und eine Kaltfluidquelle auf, die ein Temperierfluid mit einer oberen (warmen) Fluidtemperatur bzw. einer unteren (kalten) Fluidtemperatur jeweils an ihrem Abfluss zur Verfügung stellen. Ein Mischer mischt aus den beiden Temperierfluiden unterschiedlicher Temperatur mithilfe einer Steuer- oder Regeleinrichtung ein Gemischfluid, das eine gewünschte Gemischtemperatur bereitstellt. Über einen Ausgang des Mischers wird das Gemischfluid einem Wärmetauscher zugeführt. Der Wärmetauscher weist einen ersten Fluidkreislauf mit dem Gemischfluid auf und ein davon getrennten zweiten Fluidkreislauf mit Tinte auf. Im Wärmetauscher wird die Tinte durch das Gemischfluid auf eine gewünschte Solltemperatur temperiert. Die so temperierte Tinte wird einer Druckeinheit des Tintendruckers zugeführt

Beim einem Verfahren zum Betreiben einer Temperiervorrichtung von Tinte für einen Tintendrucker mit einer Temperiervorrichtung wird ein warmes und ein kaltes Temperierfluid bereitgestellt und einem Mischer zugeführt. Im Mischer werden die Anteile der beiden Temperierfluide durch eine Steuerung/Regelung so gemischt, dass die Temperatur eines Gemischfluids am Ausgang des Mischers eine gewünschte Temperatur annimmt. Dieses Gemischfluid wird in einem Wärmetauscher mit Tinte thermisch in Kontakt gebracht, um die zu druckende Tinte auf eine gewünschte Betriebstemperatur zu temperieren.

Diese Vorrichtung und dieses Verfahren haben den Vorteil, dass die zu temperierende Tinte physikalisch getrennt von dem Gemischfluid temperiert wird und dadurch nicht "verwässert" wird. Wenn die höhere Temperatur des Warmfluids (Temperierfluid der Warmfluidquelle) so eingestellt wird, dass sie stets kleiner als die maximal zulässige Tintentemperatur ist, so kann durch die Temperiervorrichtung selbst bei einer Fehlfunktion ein Überhitzen der Tinte vermieden werden, da ansonsten flüchtige Bestandteile der Tinte ausgedampft würden. Die Tinte kann dadurch nicht geschädigt werden.

Ferner kann die Kaltfluidquelle mit der niederen Temperatur des Temperierfluids so in seinem thermischen Niveau eingestellt werden, dass die zulässige minimale Tintentemperatur nicht unterschritten wird, so dass die Tinte selbst bei einer Fehlfunktion nicht unterkühlt werden kann, damit keine Bestandteile der Tinte von einem flüssigen in den festen Aggregatzustand übergehen und damit die Tinte in ihrer gewünschten Konsistenz erhalten bleibt.

Vorteilhafte Ausgestaltungen der Erfindung sind durch die Unteransprüche gekennzeichnet. So ist es vorteilhaft, wenn der Wärmetauscher ein Plattenwärmetauscher ist. Denn dann kann großflächig und damit schnell Wärme auf die Tinte übertragen werden und der Wärmetauscher arbeitet besonders effektiv.

Die Temperierfluide können Wasser sein, denen ggfs. Additive hinzugefügt werden, damit mit der Zeit keine Pilze oder sonstige Verunreinigungen in den Temperierfluiden entstehen, die die Eigenschaften des Wassers als Temperierfluid verschlechtern. Wasser hat den Vorteil, dass es umweltfreundlich ist und in ausreichender Menge zur Verfügung steht.

Eine oder beide Fluidquellen können von der Gebäude-Wasserversorgung beim Druckbetreiber gespeist werden. So kann die Warmfluidquelle mit einem Warmwasseranschluss verbunden sein und die Kaltfluidquelle mit einem Kaltwasseranschluss. Allerdings sollte dann darauf geachtet werden, das die Warmwassertemperatur nicht zu heiß ist und die Kaltwassertemperatur nicht zu kalt. Notfalls müssen die Wasserströme selber vortemperiert werden.

Somit ist die Temperiervorrichtung einfach ausgebildet und es werden keine zusätzliche Bauteile, wie Fluidvorratsbehälter, Heizeinrichtung, Kühleinrichtung, etc. dafür benötigt.

Die Fluidquellen weisen jeweils ein oder mehrere Temperatursensoren auf zum Messen der Fluidtemperaturen. Des Weiteren können am Eingang des Mischers, am Ausgang des Mischers und am Ausgang des Tintenkreislaufs am Wärmetauscher Temperatursensoren angeordnet sein, die die jeweilige Fluid- oder Tintentemperaturen messen.

Besonders vorteilhaft ist es, wenn ein Temperatursensor am oder nach dem Tintenausgang die Temperatur der Tinte direkt misst und den Messwert als Regelgröße zurück zum Mischer führt, damit die Gemischtemperatur abhängig von der Tintentemperatur entsprechend gesteuert/geregelt werden kann.

Vorteilhafterweise messen die Temperatursensoren die Temperatur der Fluids oder der Tinte direkt in dem Fluid und nicht außerhalb an den Fluidleitungen oder Tintenleitungen. Wenn die Temperatursensor mit dem Mischer zwecks Rückführung der Messwerte gekoppelt sind, kann dann die Temperatur der aus dem Wärmetauscher ausströmenden Tinte noch besser und genauer mit Hilfe eines Regelkreises geregelt werden.

Die Fluidquellen können entsprechende Vorratsbehälter aufweisen, in denen das Temperierfluid bevorratet und gegebenenfalls vortemperiert wird. Damit immer genügend Temperierfluid in der jeweiligen Fluidquelle zur Verfügung steht, kann jederzeit Temperierfluid nachgefüllt oder von außen zugeführt werden. Bei einem Anschluss einer entsprechenden Fluidquelle an einen Wasseranschluss kann die nötige Menge an Wasser als Temperierfluid jederzeit bei Bedarf zugeführt werden.

Es ist zudem vorteilhaft, wenn die warme Fluidtemperatur (auch als Warmtemperatur bezeichnet) kleiner oder gleich der maximal zulässigen Tintentemperatur eingestellt wird. Dann kann die Tinte nicht über diese Temperatur - selbst aus Versehen - aufgeheizt werden. Umgekehrt ist es vorteilhaft, wenn die kalte Fluidtemperatur (auch als Kalttemperatur bezeichnet) nur so niedrig eingestellt wird, dass die Tintentemperatur auf keinen Fall - selbst bei einer Fehlfunktion - unter diese Temperatur temperiert werden kann. Idealerweise werden die warme Fluidtemperatur und die kalte Fluidtemperatur so gewählt, dass ein großer Verstellbereich entsteht und die gewünschte Solltemperatur der Tinte etwa in einem mittleren Bereich zwischen den beiden Fluidtemperaturen liegt. Somit ist eine einfache und schnelle Regelung durch eine Mischung der beiden Temperierfluide möglich.

Wenn der Steuereinheit des Mischers ein PI-Regler (Proportional-Integral-Regler) ist, so können damit gesteuerte Mischventile die Temperierfluide schnell und einfach entsprechend der jeweiligen Mengenanteile gemischt werden. Dabei werden die zugeführten Temperierfluide durch entsprechende Zuflussmengen abhängig von der gewünschten Solltemperatur der Tinte gemischt.

Ausführungsbeispiele der Erfindung werden nachfolgend anhand von schematischen Zeichnungen näher erläutert. Es zeigen:
- Figur 1: ein Blockschaltbild einer erfindungsgemäßen Temperiervorrichtung und
- Figur 2: ein Ablaufdiagramm für ein Verfahren zum Betreiben einer Temperiervorrichtung für Tinte für einen Tintendrucker, der eine Temperiervorrichtung nach Figur 1 aufweist.

Im Folgenden wird die Erfindung anhand von mehreren Ausführungsbeispielen einer Temperiervorrichtung für einen Tintendrucker näher erläutert, der hier in einem bevorzugten Ausführungsbeispiel zum vierfarbigen Drucken ausgebildet ist. Statt Tinte können auch andere flüssige Druckfarben (das sind farbmittelhaltige Gemische, die mit Hilfe einer Druckform auf einen Bedruckstoff übertragen werden und wasser- oder ölbasiert sind mit jeweils Farbmitteln drin) verwendet werden. Selbstverständlich können auch mehr oder weniger Farben von Tinten oder Gemische verwendet werden ohne vom Erfindungsgedanken abzuweichen. In den Figuren sind nur die wesentlichen und für die Funktionalität der Erfindung erforderlichen Komponenten näher erläutert und funktional gleiche oder identische Elemente mit denselben Bezugszeichen gekennzeichnet.

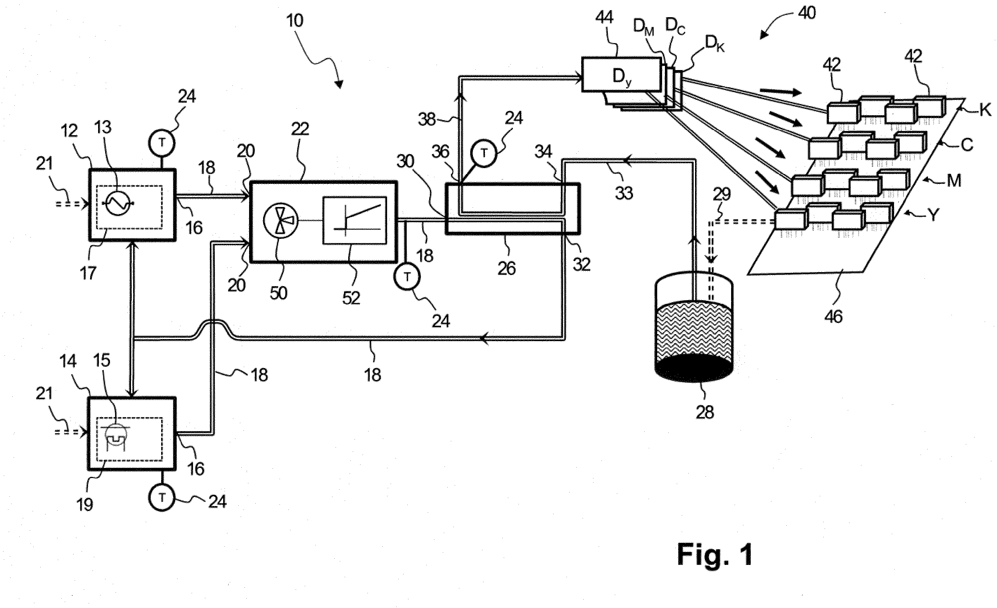

In Figur 1 ist ein erstes Ausführungsbeispiel einer Temperiervorrichtung 10 zum Temperieren von Tinte für einen Tintendrucker dargestellt. Die Temperiervorrichtung 10 weist eine Warmfluidquelle 12 für ein warmes Temperierfluid (hier auch als Warmfluid bezeichnet) und eine Kaltfluidquelle 14 für eine kaltes Temperierfluid (hier auch als Kaltfluid bezeichnet) auf. Dabei steht in der Warmfluidquelle 12 Warmfluid in einem Fluidvorratsbehälter 17 mit einer vorbestimmten warmen oder oberen Temperatur (auch als Warmtemperatur bezeichnet) zu Verfügung, während in der Kaltfluidquelle 14 ein Kaltfluid in einem Fluidvorratsbehälter 19 mit einer kalten oder unteren Temperatur (auch als Kalttemperatur bezeichnet) zur Verfügung steht. Die beiden Fluidquellen weisen jeweils zumindest einen Abfluss 16 als Ausgang auf, die über eine jeweilige Fluidleitung 18 mit Zuflüssen 20 zu einem Mischer 22 verbunden sind. Für den Betrieb des Tintendruckers werden das Warmfluid und das Kaltfluid jeweils auf die Warmtemperatur bzw. Kalttemperatur gebracht und während des Betriebs dort weitgehend gehalten.

In dem Mischer 22 werden die beiden Temperierfluide mengenmäßig so zusammengemischt, dass ein Gemisch entsteht, das eine aus den Einzeltemperaturen der beiden Temperierfluide resultierende Gemischtemperatur am Ausgang 17 des Mischers 22 aufweist. Die Mischung der beiden Temperierfluide wird dabei derart gesteuert oder geregelt abhängig von einer gewünschten Tintentemperatur (Betriebstemperatur oder Solltemperatur), wie sie zum Drucken mit dem Tintendrucker für ein optimales Druckbild benötigt wird.

Die Temperaturen der Temperierfluide können auf ein entsprechend gewünschtes Temperaturniveau gebracht werden, falls sie dieses nicht bereits beim Zuführen/Nachfüllen in die jeweilige Fluidquelle 12, 14 innehaben. Zudem können die Temperaturen der Temperierfluide in den Fluidquellen 12, 14 selber und/oder auch auf der Weg zum Mischer 22 (entlang der Fluidleitungen 18) sowie an den Zuflüssen 20 des Mischers 22 gemessen werden. Hierzu sind Temperatursensoren 24 (auch als Temperaturfühler bezeichnet) entsprechend angeordnet, die die Temperaturen der Fluids vorzugsweise direkt in dem Fluid jeweils messen. Die Temperaturen der Temperierfluide können alternativ oder zusätzlich vor oder im Mischer 22 gemessen werden, um die Mischung der beiden Temperierfluide für eine gewünschte Gemischtemperatur schnell und zuverlässig zu erhalten. Auch direkt nach dem Mischer 22 kann zusätzlicher ein Temperatursensor 24 angeordnet sein, der die Gemischtemperatur erfasst.

Eine oder mehrere der von den Temperatursensoren 24 gemessenen Temperaturwerte können zum Steuern oder Regeln der gewünschten Tintentemperatur zum Drucken der Tinte verwendet werden und werden hierzu an den Mischer 22 gemeldet (die entsprechenden elektrischen Leitungen oder Drahtlosverbindungen sind der Übersichtlichkeit halber nicht in Figur 1 dargestellt).

Das Gemisch mit einer erforderlichen, gewünschten oder angestrebten Gemischtemperatur wird einem Wärmetauscher 26 zugeführt. Der Wärmetauscher 26 weist ein Gemischkreislauf und einen Tintenkreislauf auf. Durch den Gemischkreislauf strömt das Gemisch vom Mischer 22 kommend. Und durch den Tintenkreislauf strömt die benötigte Tinte von einem Tintenvorratsbehälter 28 kommend. Die beiden Kreisläufe sind physikalisch, beispielsweise durch eine thermisch leitende Wand, Wandung oder Abtrennung (nicht in Fig. 1 dargestellt), voneinander getrennt. Die thermische Energie des Gemischs wird über die Wand auf die Tinte des Tintenkreislaufs übertragen (Wärmeübertragung immer vom wärmeren Medium auf das Kältere). Durch entsprechende Steuerung/Regelung der Temperatur des Gemischs wird die Tinte infolge der Wärmeübertragung im Wärmetauscher 26 auf eine gewünschte Solltemperatur temperiert, die dann zum Bedrucken notwendig ist, um eine entsprechend gute Druckqualität des Druckbildes zu erreichen.

Das Gemisch wird dem Wärmetauscher 26 von dem Mischer 22 kommend über einen Gemischeintritt 30 zugeführt und über einen Gemischaustritt 32 und über eine Fluidleitung 18, die als Rückführleitung dient, zu einer der beiden Fluidquellen 12, 14 oder beiden Fluidquellen 12, 14 zurückgeführt.

Die Tinte wird dem Wärmetauscher 26 über eine Tintenleitung 33 einem Tinteneintritt 34 zugeführt und von einem Tintenaustritt 36 über eine Tintenleitung 38 temperiert einer Druckeinheit 40 zugeführt. Die Tinte kann über einen Tintenvorratsbehälter 28 oder einen Backpressuretank (nicht explizit in der Fig. 1 dargestellt) dem Wärmetauscher 26 zugeführt werden. Die beim Bedrucken nicht verbrauchte Tinte kann zurückgeführt werden zu dem Tintenvorratsbehälter 28, was in der Figur 1 durch die gestrichelte Rückführleitung 29 dargestellt ist. Bevor die Tinte den Wärmetauscher 26 erreicht, kann sie bereits in dem Tintenvorratsbehälter 28 vortemperiert werden, was zu einer schnelleren Regelung bis zur Betriebstemperatur führt. Außerdem kann die Tinte vor dem Wärmetauscher 26 in einem Backpressuretank entgast und auf entsprechenden hydraulischen Druck gebracht werden, was insbesondere für eine gute Druckqualität eine große Rolle spielt.

Die Druckeinheit 40 kann einen Distributionstank 44 aufweisen, in dem die zugeführte und temperierte Tinte zwischengespeichert wird. Von dem Distributionstank 44 aus wird die Tinte einem oder mehreren Druckköpfen 42 zugeführt, die dann einen Aufzeichnungsträger 46 (Bedruckstoff) bedrucken können. Der Distributionstank 44 kann auch am oder in den Gehäusen der Druckköpfe 42 integriert sein. Ebenso kann in den Druckköpfen 42 eine Entgasungseinrichtung enthalten sein, die die Tinte (ggfs. zusätzlich oder erneut) entgast. Alternativ oder zusätzlich kann ein Temperatursensor in den Druckköpfen 42 integriert sein.

Für jede Tintenfarbe ist vorzugsweise ein eigener Mischer 22 und ein damit verbundener Wärmetauscher 26 vorhanden. D.h. jeder Druckeinheit 40 ist dann jeweils eine eigene Temperiervorrichtung 10 zugeordnet, die die jeweilige Tinte für die entsprechende Druckeinheit 40 temperiert. Es können auch nur zwei Fluidquellen 12, 14 vorhanden sein für alle Tintenfarben. Dann wird bei jeder Farbe jeder Mischer 22 von den beiden Fluidquellen 12, 14 gespeist und die jeweilige Tinte wird dann über jeden Mischer 22 mit anschließendem Wärmetauscher 26 temperiert. Es kann auch ein einziger Mischer 22 mit mehreren Wärmetauschern 26 verbunden werden, wenn die jeweiligen Tinten auf dieselbe Solltemperatur geregelt werden sollen.

Auf diese Weise weist die Temperiervorrichtung 10 zwei Fluidkreisläufe auf, und zwar einmal für die Temperierfluide inklusive des Gemischs und einmal für Tinte, die über den Wärmetauscher 26 der Druckeinheit 40 zugeführt wird.

Die Warmfluidquelle 12 und die Kaltfluidquelle 14 können jeweils einen Behälter für das jeweilige Temperierfluid aufweisen, in denen ein Heizelement 13 und/oder Kühlelement 15 angeordnet sein kann, um die gewünschte Temperatur des jeweiligen Temperierfluids einzustellen. Beim Hochfahren des Tintendruckers wird die Fluidtemperatur in den beiden Fluidquellen 12, 14 eingestellt und während des Druckbetriebs wird diese Temperatur weitgehend gehalten.

Eine oder beide Fluidquellen 12, 14 können in dem Gehäuse des Tintendruckers angeordnet sein. Eine oder beide Fluidquellen 12, 14 können auch außerhalb des Tintendruckers angeordnet sein, wobei dann die beiden Temperierfluide getrennt voneinander über entsprechende Fluidleitungen 18 dem Mischer 22 zugeführt werden.

Als Heizelemente 13 können herkömmliche Heizelemente wie beispielsweise eine Heizspirale verwendet werden, die um eine Leitung herum verläuft und das durchströmende Fluid erwärmt, oder Heißleiter, die direkt im Fluid angeordnet sind, und dieses auf eine gewünschte obere Temperatur aufwärmen. Als Kühlelemente 15 können herkömmliche Kühlelemente, wie Kühlaggregate, Kaltleiter oder Kühlkompressoren verwendet werden, die das Kaltfluid auf eine gewünschte untere Temperatur kühlt oder temperiert.

Als Temperierfluid kann jedes geeignete Fluid verwendet werden, sei es Gas oder eine Flüssigkeit, die die Wärme beim Transport, d.h. beim Strömen durch entsprechende Leitungen gut leiten können. Vorzugsweise wird Wasser verwendet, das sehr umweltverträglich ist und ausreichend zur Verfügung steht. Dem Wasser können bestimmte Additive oder Chemikalien, wie Fungizide oder Biozide zugefügt sein, um eventuell die Wärmeleitung beeinträchtigende Einwirkungen, wie beispielsweise durch Pilzbefall oder Algen zu verhindern.

Die zwei Fluidquellen 12, 14 können auch von einem eigenen Hauswasseranschluss des Betreibers, bei dem der Tintendrucker steht, gespeist werden. Dabei kann das entnommene Leitungswasser (dies kann der Kaltwasseranschluss und/oder der Warmwasseranschluss sein) über Zufuhranschlüsse 21 zu den Fluidvorratsbehältern 17, 19 oder direkt zu den Abflüssen 16 der Fluidquellen 12, 14 zugeführt werden (die externen Zufuhranschlüsse 21 für Warmfluid und für Kaltfluid sind durch die gestrichelten Pfeile dargestellt). Somit kann Wasser (Temperierfluid) bei Bedarf in die Fluidvorratsbehälter 17, 19 gefüllt oder bei Bedarf nachgefüllt werden oder direkt in die Fluidleitungen 18 geleitet werden, um das bereits vortemperierte Wasser dem Mischer 22 zuzuführen.

Die Temperaturen der Temperierfluide werden dabei so eingestellt, dass das Warmfluid eine obere oder wärmere Temperatur aufweist und das Kaltfluid eine kleinere untere (kältere) Temperatur aufweist. Die beiden Temperaturen werden so gewählt, dass die gewünschte Solltemperatur der Tinte etwa grob in der Mitte der beiden Temperaturen der Temperierfluide liegt. Die Gemischtemperatur wird dann durch entsprechend verhältnismäßige Mischung der zwei Volumenströme der Temperierfluide gegebenenfalls auch unter Berücksichtigung ihrer jeweiligen Wärmekapazitäten je Volumen eingestellt. Aus diesem Grunde brauchen die Temperaturen der beiden Temperierfluide nicht so genau voreingestellt zu werden, da anschließend die Gemischtemperatur entsprechend durch eine Regelung mit Rückkopplung der gemessenen Tintentemperatur (Istwert) und einem Vergleich mit der gewünschten Betriebstemperatur (Sollwert) sehr genau geregelt wird.

Dies ist sehr vorteilhaft, wenn beispielsweise Leitungswasser aus einem Hausanschluss als Fluidquelle 12, 14 verwendet wird.

Wenn die vom Hersteller der Tinte spezifizierte Betriebstemperatur der Tinte beispielsweise 32° betragen sollte (ideale, vom Hersteller spezifizierte Temperatur der Tinte zum Erzielen einer optimalen Druckqualität), so kann die Temperatur des Warmfluids beispielsweise auf etwa 40° C eingestellt werden und die Temperatur des Kaltfluids auf etwa 20° C eingestellt werden. Allerdings ist darauf zu achten, dass die Temperatur des Warmfluids nicht größer ist als die Temperatur, die maximal zulässig ist für die Tinte. Somit kann die Tintentemperatur selbst bei Ausfall der Regelung im Mischer 22 nicht über diese maximal zulässige Temperatur steigt, da das Gemisch aus den beiden Temperaturfluids gemischt wird und die Gemischtemperatur durch die Mischung nie größer werden kann als die voreingestellte Temperatur des Warmfluids.

Durch diesen großen Bereich zwischen der Warmtemperatur und der Kalttemperatur wird eine maximal gute Spreizung möglich, mit dem eine flexible Temperiervorrichtung 10 geschaffen wird mit einem großen Einstellbereich für die Solltemperatur der Tinte. D.h. die Tinte kann je nach Anforderung und Spezifikation in einem möglichst großen Bereich durch die Mischung in ihrer Temperatur variiert und damit eingestellt werden, ohne dass die Bestandteile der Temperiervorrichtung 10 geändert werden müssen. Es können also viele unterschiedlich Tinten mit der Temperiervorrichtung 10 verwendet werden.

Die Mischung der beiden Temperierfluide hängt dabei von der Durchflussmenge des jeweiligen Fluids und dessen Temperatur ab, wobei auf die gewünschte, resultierende Gemischtemperatur geregelt oder gesteuert wird abhängig von der gewünschten Solltemperatur der Tinte (durch Rückkoppeln des Istwerts der gemessenen Tintentemperatur). Bei der Durchflussrate oder Durchflussmenge (wird auch als Volumenstrom bezeichnet) kommt es darauf an, wie viel Volumen/Menge des jeweiligen Temperierfluids pro Zeitspanne durch die Mischventile 50 des Mischers 22 fließen, um die gewünschte Gemischtemperatur zu erhalten.

In dem Mischer 22 findet eine gesteuerte oder geregelte Mischung der beiden Temperaturfluids statt, indem jeweils eine entsprechende Menge an Temperierfluiden mit der jeweiligen Fluidtemperatur über Mischventile 50 so gemischt werden, dass am Ausgang 17 des Mischers 22 eine gewünschte Gemischtemperatur erreicht wird. Hierzu kann ein herkömmliches Mischventil 50 (Mehrwegventil) verwendet werden mit zwei Eingängen für die Temperierfluide und mindestens einem Ausgang für das Gemischfluid. In solchen Mischventilen 50 können die eingangsseitigen Volumenströme je nach gewünschtem Verhältnis verändert werden, damit die entsprechende und gewünschte Gemischtemperatur am Ausgang erreicht wird. Die Mischung kann durch eine Steuereinheit oder einen Regler 52 abhängig von der gemessenen Temperatur der Tinte (Istwert) als Regelgröße vorgenommen werden, d.h. die Mischung ist abhängig von der tatsächlich gemessenen Tintentemperatur, bei der dann die einzelnen Mengen der beiden Temperierfluide entsprechend gemischt werden.

Vorzugsweise kann ein PI-Regler (Proportional-Integral-Regler) als Regler 52 verwendet werden, wie er hinlänglich aus der Regelungstechnik bekannt ist. Dabei wirkt der in den Regelkreis eingebundene Regler 52 so auf die Mischung der beiden Temperierfluide ein, dass sich die zu regelnde Temperatur der Tinte mit Hilfe der Rückführung des gemessenen Temperaturwertes der Tinte auf das Niveau der gewünschten Solltemperatur der Tinte einstellt. Selbstverständlich können auch andere geeignete Steuereinheiten oder Regler 52 verwendet werden, um die gewünschte Solltemperatur der Tinte kurz vor der Druckeinheit 40 zu erreichen.

Wenn beispielsweise die Gemischtemperatur höher sein sollte, so wird durch den Mischer 22 (insbesondere durch den Regler 52) die Zuflussmenge/-anteil an Warmfluid erhöht und/oder die Zuflussmenge an Kaltfluid erniedrigt. Umgekehrt wird bei einer gewünschten niedrigeren Gemischtemperatur der Anteil/Zuflussmenge des Warmfluids erniedrigt und/oder der Anteil oder die Zuflussmenge an Kaltfluid erhöht. Dabei wird vorzugsweise die Temperatur der Tinte nach dem Tintenaustritt 36 des Wärmetauschers 26 gemessen und für die Steuerung oder Regelung zum Regler 52 zurückgeführt. Allerdings sollte dann der Strömungsweg bis zum Druckkopf 42 relativ kurz sein und die Tinte entlang des Weges nicht zu viel Wärmeverlust erleiden. Alternativ könnte die Solltemperatur am Ausgang des Wärmetauschers 26 um einen Korrekturfaktor höher geregelt sein, um bedingt durch die Wärmeverluste die korrekte Betriebstemperatur der Tinte bei den Druckköpfen 42 zu erreichen.

Alternativ kann auch die Gemischtemperatur am Ausgang 17 des Mischers 22 gemessen und rückgekoppelt werden. Allerdings muss dann ein kleiner Wärmeverlust, der durch den Wärmetauscher 26 verursacht wird, als Korrekturfaktor mit berücksichtigt werden, um den Istwert auf den Sollwert (Betriebstemperatur) der Tinte zu regeln.

Wenn generell die Temperatur der Tinte möglichst nahe am "Verbrauch", d.h. am Druckkopf 42 oder direkt am Tintenausgang des Wärmetauschers 26 bei kurzem Strömungsweg zum Druckkopf 42 gemessen wird, ist die Genauigkeit der Regelung am größten. Um Tinte auf Solltemperatur für die Druckeinheit 40 möglichst unverändert oder kaum verändert bereitzustellen, sollten die Leitungswege der Tintenleitung 38 von dem Wärmetauscher 26 zu der Druckeinheit 40 und dort bis zum Druckkopf 42 möglichst kurz gehalten werden und vorzugsweise thermisch isoliert sein (wie z.B. bei entsprechenden Tintenleitungen 38 aus Kunststoff). D.h. der Wärmetauscher 26 sollte vorteilhafterweise nahe an der Druckeinheit 40 angeordnet sein. Ansonsten müssten die tatsächlichen Wärmeverluste entlang der Tintenleitung bei der Regelung der Solltemperatur als Korrekturfaktor mit berücksichtigt werden. In einem solchen Fall müsste die Solltemperatur am Tintenaustritt 36 des Wärmetauschers 26 um den Korrekturfaktor höher eingeregelt werden als die tatsächlich in der Druckeinheit 40 benötigte und gewünschte Temperatur der Tinte.

Der Wärmetauscher 26 (auch als Wärmeübertrager bezeichnet) ist eine Vorrichtung, die thermische Energie von dem durch den Wärmetauscher 26 fließenden Gemischstrom auf den durch den Wärmetauscher 26 fließenden Tintenstrom überträgt. Der Wärmetauscher 26 wird also von zwei Stoffströmen (Gemisch und Tinte) durchströmt, um einen der beiden Stoffströme auf einen vorgegebenen thermodynamischen Zustand infolge von Wärmetausch durch den anderen Stoffstrom zu bringen. Die von dem wärmeren Strom (in der Regel das Gemisch) abgegebene und gleichzeitig von dem kälteren Strom (in der Regel die Tinte) aufgenommene thermische Leistung wird dazu verwendet, die Tinte in ihrer Temperatur zu temperieren.

Die von dem Gemischstrom abgegebene und von dem Tintenstrom aufgenommene thermische Leistung wird dabei ausgenutzt, um die Temperatur der Tinte auf einen gewünschten Sollwert zu bringen. Dabei wird die Wärme vom wärmeren Stoffstrom abgegeben und vom kälteren Stoffstrom aufgenommen. Somit ist sowohl ein Erwärmen als auch ein Kühlen der Tinte möglich, je nach Bedarf und Temperatur der beiden Stoffströme.

Der Wärmetauscher 26 kann auf vielfältige Weise ausgestaltet werden, vorausgesetzt es sind zwei physikalisch getrennte Stoffströme (Gemisch und Tinte) vorhanden, über die thermische Energie von einem Stoffstrom zum anderen übertragen wird. So kann der Gemischstrom in die gleiche Richtung wie der Tintenstrom strömen oder auch entgegengesetzt (wie es in der Figur 1 dargestellt ist).

Es gibt auch die Möglichkeit, dass sich die Stoffströme kreuzen oder ein Stoffstrom spiralförmig um den andern mithilfe einer entsprechenden Leitung geführt wird. Wesentlich ist, dass die beiden Stoffströme durch eine gut thermisch leitende Wand oder ein entsprechendes trennendes Bauteil physisch (körperlich) voneinander separiert sind (also nur in thermischem Kontakt, aber nicht in direktem Kontakt), so dass die Tinte nicht durch das Gemisch verunreinigt oder verwässert wird. Auch sollte die Wärmeübertragung möglichst effektiv sein, damit die Temperatur der Tinte am Tintenaustritt 36 des Wärmetauschers 26 möglichst genau auf den gewünschten Wert (Solltemperatur der Tinte) eingestellt werden kann, selbst wenn nur die Gemischtemperatur am Ausgang 17 des Mischers 22 für die Regelung gemessen und zum Regler 52 zurückgekoppelt werden sollte. Vorteilhafter wird allerdings die Temperatur der Tinte am Tintenaustritt 36 des Wärmetauschers 26 oder noch besser danach in der Druckeinheit 40 an oder nahe den Druckköpfen 42 gemessen.

Vorzugsweise ist der Wärmetauscher 26 als Plattenwärmetauscher ausgebildet, bei dem die thermische Energie über die gut thermisch leitende Wand übertragen wird. Dabei sind die beiden Stoffströme räumlich durch die wärmedurchlässige Wand getrennt. Die Wand oder Wandung, die die beiden Stoffströme trennt, sollte eine gute Wärmeleitfähigkeit und eine große Oberfläche aufweisen, damit die thermische Energie möglichst effektiv übertragen werden kann. Je großflächiger die Platten ausgebildet sind, je thermisch leitfähiger die Wand dazwischen ausgebildet ist und je dünner die Wand ist, desto effektiver ist die Wärmeübertragung.

Die temperierte Tinte wird nach dem Wärmetauscher 26 der Druckeinheit 40 zugeführt. Diese kann einen Distributionstank 44 aufweisen, der die Tinte an ein oder mehrere Druckköpfe 42 verteilt, mit denen jeweils dieselbe Tinte verdruckt wird. Distributionstank 44 und ggfs. Entgasungseinheit (nicht dargestellt) können auch in der Druckkopfeinheit selber angeordnet sein.

Für jede Druckfarbe (z.B. eine Tinte mit einer bestimmten Farbe) ist eine eigene Temperiervorrichtung 10 vorgesehen, die dann die entsprechende Tinte an die entsprechenden Druckköpfe 42 weiterleitet, damit auch diese Farbe mit entsprechenden Druckköpfen 42 verdruckt werden kann. Denn jede Tinte kann typischerweise seine eigene chemische Zusammensetzung aufweisen und somit auch ein eigene Solltemperatur, bei der mit der Tinte optimal gedruckt werden kann.

Die Strömungswege der Stoffströme (Temperierfluid, Gemisch, Tinte) sind durch entsprechende Fluidleitungen 18 vorgegeben. Die Fluidleitungen 18 können rohrförmig ausgebildet sein und aus Metall, Kunststoff oder sonstig geeigneten Materialien, wie Verbundstoffen bestehen. Die Stoffströme fließen dabei entsprechend in die Richtung in den Fluidleitungen 18, wie sie durch die Pfeile in der Figur 1 dargestellt sind.

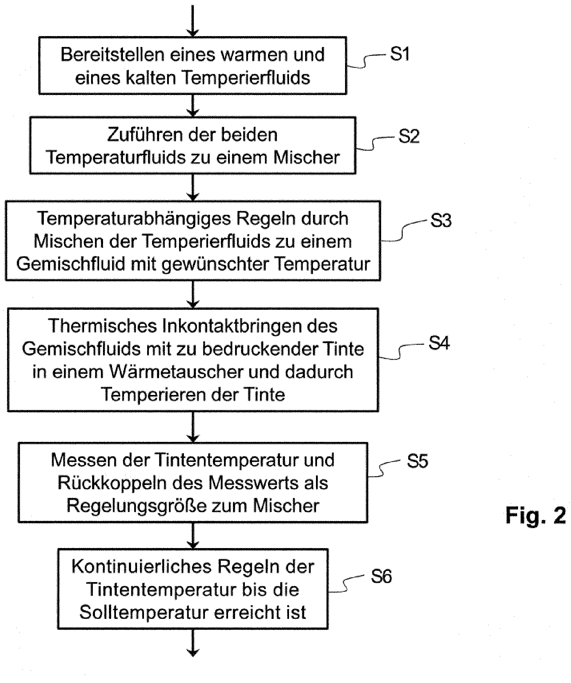

In Figur 2 ist ein Ablaufdiagramm eines Verfahrens zum Betreiben einer Temperiervorrichtung 10 dargestellt, wie sie in Zusammenhang mit Figur 1 beschrieben wurde. Dabei werden zunächst im Schritt S1 zwei Temperierfluide mit unterschiedlichen Temperaturen zur Verfügung gestellt, d.h. ein Warmfluid und ein Kaltfluid. Diese beiden Temperierfluide werden im Schritt S2 einem Mischer 22 zugeführt, der durch temperaturabhängiges Regeln oder Steuern die Anteile der beiden unterschiedlich temperierten Temperierfluide zu einem Gemischfluid mit einer gewünschten Temperatur vermischt (im Schritt S3), um letztendlich damit die Tinte auf Solltemperatur zu bringen.

Das Gemisch wird im Schritt S4 einem Wärmetauscher 26 zugeführt, wo es thermisch in Kontakt gebracht wird mit einer zu bedruckenden Tinte, die ebenfalls durch den Wärmetauscher 26 strömt. Dabei wird thermische Energie vom Gemischfluid auf die Tinte oder in umgekehrter Richtung übertragen. Danach wird im Schritt S5 die Tintentemperatur gemessen und der Messwert zur Regelung zum Mischer 22 zurückgekoppelt. Dort wird dann im Schritt S6 die Tintentemperatur so lange kontinuierlich geregelt (d.h. der Istwert gemessen, mit dem Sollwert vergleichen und entsprechend der Differenz zwischen Soll- und Istwert wird die Tinte entsprechend weiter temperiert), bis die Solltemperatur der Tinte erreicht ist und danach auch weitgehend gehalten wird.

Durch die Wärmeübertragung vom Gemischstrom auf den Tintenstrom wird die Tinte temperiert. Ziel ist es, am Ausgang des Wärmetauschers 26 eine gewünschte Temperatur der Tinte zu erhalten, die bereits der Solltemperatur entspricht oder nahe dran ist. Dies wird durch eine Regelung bewerkstelligt, bei der die Tintentemperatur beispielsweise direkt am Ausgang des Wärmetauschers 26 oder kurz danach und/oder an oder in der Nähe der Druckköpfe 42 gemessen wird und dann als Istwert dem Mischer 22 zur Regelung zurückgekoppelt. Danach wird das Mischungsverhältnis der beiden Temperierfluide so lange gesteuert/geregelt, d.h. verändert, bis die gewünschte Solltemperatur der Tinte tatsächlich erreicht ist. Danach wird ständig weitergeregelt, damit die Solltemperatur auch erhalten bleibt. Die Temperatur des Gemischs kann auch durch eine Mischung abhängig von den Volumenströmen pro Zeit der beiden Temperierfluide geregelt werden, sofern die Temperaturen der beiden Temperierfluide dem Mischer bekannt sind.

Vorzugsweise wird mit dem eigentlichen Drucken erst begonnen, wenn die Tintentemperatur auf Betriebstemperatur geregelt ist (innerhalb der Toleranzbreite). Je schneller dies geschieht, um so schneller kann mit dem Drucken begonnen werden. Wird bereits eher mit dem Drucken begonnen, kann es vorkommen, dass die Druckqualität noch nicht akzeptabel ist.

Mit dieser Temperiervorrichtung 10 ist es möglich, jede Solltemperatur von jeder Druckfarbe einzustellen, wobei eingangsseitig nur zwei auf unterschiedlicher Temperatur liegende Temperierfluide benötigt werden. Die Genauigkeit der Temperatureinstellung der Solltemperatur hängt dabei im Wesentlichen von der geregelten Mischung der Temperierfluide ab. Die genauen Temperaturniveaus der eingangsseitigen Fluidquellen 12, 14 sind von untergeordneter Bedeutung, da die eigentlich genaue Temperatureinstellung im Mischer 22 durch einen Regelkreis erfolgt, der vom gemessenen Istwert und der Differenz von Sollwert und Istwert der Tinte abhängig ist. D.h. die Temperaturniveaus der eingangsseitigen Fluidquellen 12, 14 müssen nicht hoch genau sein und können auch leicht schwanken. Um den Regelaufwand zu mindern, können die Temperaturniveaus der Fluidquellen bereits auf einem weitgehend konstanten Wert stabilisiert sein.

Diese Art der zwei unterschiedlich temperierten Fluidquellen 12, 14 hat den Vorteil, dass die Tinte sowohl erwärmt als auch gekühlt werden kann. Die Änderungen der zu regelnden Temperatur der Tinte ist - ausgehend von einem mittleren Wert der beiden Fluidtemperaturen - sowohl nach oben als auch nach unten in einem großen Variationsbereich möglich. Allerdings entspricht der Variationsbereich dem Temperaturunterschied zwischen den vorgegebenen Temperaturen des Warmfluids und des Kaltfluids. Denn die Tinte kann nur auf eine Temperatur geregelt werden, die zwischen der Warmtemperatur und der Kalttemperatur liegt.

Bei dieser Temperiervorrichtung 10 ist es vorteilhaft, wenn der Tintenkreislauf vom Tintenvorratsbehälter 28 über den Wärmetauscher 26 und Distributionstank 44 mit restlicher Tinte, die nicht verdruckt wird, zurück zum Tintenvorratsbehälter 28 ständig durchströmt wird (Zirkulationskreis), damit die Tinte in einem in dem gesamten Zirkulationskreislauf vorhandenen Einrichtung ständig entgast, auf weitgehend demselben Temperaturniveau gehalten und unter einem vorgegebenen hydraulischen Druck gehalten werden kann, um ein optimales Druckergebnis zu erhalten. Wenn die Temperatur der Tinte bereits nahe der Solltemperatur, beispielsweise in dem Tintenvorratsbehälter 28 vorliegt, so wird der Regelaufwand wesentlich geringer. Somit kann mit dem Drucken bald ohne große Wartezeit oder Verzögerung begonnen werden, da die Tintentemperatur schon nahe des gewünschten Werts ist.

Bevor jedoch gedruckt wird, sollte die Tinte auf die entsprechende Solltemperatur gebracht worden sein, was jedoch durch die Temperiervorrichtung 10 relativ schnell geregelt werden kann. Danach nimmt die Regeltätigkeit ab, da die Tinte nur noch auf Solltemperatur gehalten werden muss.

Backpressuretanks sind hinlänglich bekannt beim digitalen Tintendruck. Daher braucht hier nicht näher darauf eingegangen zu sein. Es muss auch nicht unbedingt ein eigener Backpressuretank vorhanden sein, sondern seine Funktion kann auch durch eine entsprechende Einrichtungen direkt bei den Druckköpfen 42 übernommen werden. Die nicht verdruckte Tinte muss auch nicht in den Tintenvorratsbehälter 28 zurückgeführt werden, sondern kann auch anderweitig gesammelt oder entsorgt werden.

Die Temperatursensoren 24 als solche sind hinlänglich bekannt. Zum Messen von Temperaturen von Fluids/Tinten können alle geeigneten Temperatursensor 24 wie Heißleiter (NTC), Kaltleiter (PTC), Thermoelemente, Peltierelemente, usw. verwendet werden, die ein elektrisches Signal als Maß für die Temperatur liefern. Vorzugsweise wird die Temperatur eines Fluids/Tinte direkt in dem Fluid/Tinte gemessen. Wird die Temperatur außen an der Fluidleitung 18 gemessen, so kann der Messwert etwas von der Fluidtemperatur abweichen. Es müsste also eine kleine Korrektur vorgenommen werden, um die gemessene Temperatur für die Regelung zu verwenden.

Bei dem Ausführungsbeispiel nach Fig. 1 wird die Temperatur der Tinte am Ausgang des Wärmetauschers 26 oder danach gemessen, wobei der Temperatursensor 24 die Temperatur am genauesten direkt innerhalb des Fluids misst. Die Temperatur der Tinte kann auch in den Druckköpfen 42 gemessen werden. Dies hat den Vorteil, dass die Temperatur dann dort gemessen wird, wo sie tatsächlich relevant ist. Somit kann die Regelung genauer werden. In allen Fällen wird ein gemessener Temperaturwert zum Regeln der Tintentemperatur zum Mischer 22 zurückgekoppelt, dort mit der Solltemperatur verglichen und die Mischung aus Warmfluid und Kaltfluid entsprechend geregelt (üblicherweise in vielen Regeldurchgängen).

Die erfindungsgemäße Temperiervorrichtung 10 benötigt keine separaten Warm- oder Kühlkreisläufe, sondern es sind eine Warmfluidquelle 12 und eine Kaltfluidquelle 14 vorhanden, die jeweils ein Temperierfluid (und zwar ein Warmfluid und ein Kaltfluid) auf jeweils vorbestimmten Temperaturen bereitstellen. Die beiden Temperierfluide werden dann mengen- oder anteilsmäßig so gemischt, dass ein Gemischfluid mit einer gewünschten Gemischtemperatur entsteht. Als Regelgröße dient vorzugsweise ein Temperaturwert der Tinte, der nach dem Wärmetauscher 26 gemessen wird. Eingeschränkt möglich sind auch zusätzliche Temperaturmessungen des Gemischs am Ausgang 17 des Mischers 22. Besonders vorteilhaft ist eine Temperaturmessung direkt vor und/oder direkt in der Druckeinheit 40, wobei die gemessenen Werte dem Mischer 22 zum anteilsmäßigen Mischen zum Regeln der Tintentemperatur als Regelgröße zurückgeführt oder zurückgekoppelt werden.

Unter dem Begriff "Tinte" sind generell "Druckfarben" zu verstehen, die farbmittelhaltige Gemische sind und mit denen ein Bedruckstoff (Aufzeichnungsträger 46) zum Erzeugen des Druckbilds und damit eines Druckguts mithilfe von Druckköpfen 42 bedruckt wird. Vorzugsweise werden wasserbasierte Druckfarben, wie wässrige Tinten verwendet. Es können aber auch andere nichtwasserbasierte Druckfarben verwendet werden.

Der Begriff "Farbe" betrifft nur die eigentlich Farbe des Farbmittels, wie zum Beispiel die häufig in der Drucktechnik verwendeten Farben YMCK (Yellow, Magenta, Cyan, Black) oder RGB (Rot, Gelb, Blau) zusammen mit Schwarz.

Der Begriff "Bedruckstoff" bezeichnet das Grundmaterial, auf das gedruckt wird. Der Bedruckstoff (oder auch als Aufzeichnungsträger 46 bezeichnet) kann aus Papier, Kunststoffen (Polymeren) oder sonstigen geeigneten Materialen oder Mischmaterialien bestehen.

Jede Tinte weist einen spezifizierten Betriebstemperaturwert auf, der vom Hersteller vorgegeben wird und die optimale Temperatur für den Druckbetrieb darstellt. Dieser Wert kann auch als Sollwert bezeichnet werden. Auf diesen Wert sollte die Tinte im Druckbetrieb temperiert sein, um eine optimale Druckqualität des Druckbild zu erhalten. Der Hersteller spezifiziert auch einen engen Toleranzbereich, innerhalb dessen noch eine zulässige Abweichung der Tintentemperatur möglich ist ohne dass es Einbußen bei der Druckqualität gibt. Die Tinte sollte also auf den Sollwert temperiert werden und dort auch (innerhalb des Toleranzbereichs) während des Druckens gehalten werden. Abweichungen innerhalb des Toleranzbereichs sind unbedenklich für die Druckqualität. So kann der spezifizierte Temperaturwert beispielsweise 32° C betragen mit einem Toleranzbereich von etwa ± 1° C.

Generell soll keine Schädigung der Tinte durch Überhitzen oder Unterkühlen eintreten, auch nicht wenn Mischer 22 oder Wärmetauscher 26 zumindest teilweise ausfallen oder gestört sind. Daher wird die Tintentemperatur aus einer Mischung aus einem Warmfluid und einem Kaltfluid erhalten. Infolgedessen kann die Tintentemperatur nie auf eine höhere Temperatur als die Temperatur des Warmfluids erwärmt werden und nie auf eine niedrigere Temperatur als die Temperatur des Kaltfluids abgekühlt werden. Um einen möglichst breiten (aber nicht zu großen) Variationsbereich für die Tinte zu erhalten, werden die Temperatur des Warmfluids auf die maximal verträgliche Temperatur der Tinte und die Temperatur des Kaltfluids auf die minimal verträgliche Temperatur der Tinte vorgegeben. So kann das Warmfluid beispielsweise eine Temperatur von +40° C haben und das Kaltfluid eine Temperatur von +20° C haben bei einer spezifizierten Solltemperatur von beispielsweise +32° C.

Druckeinheiten 40 eines Tintendruckers sind hinlänglich bekannt und brauchen hier nicht näher erläutert zu werden. Für die Erfindung spielt die Art und Weise des Aufbringens der Tinte und die Art des Aufzeichnungsträgers 46 eine untergeordnete Rolle.

Der PI-Regler (engl. proportional-integral controller) besteht aus den Anteilen eines P-Gliedes (Proportionalglied) und eines I-Gliedes (Integralglied) mit einer Zeitkonstanten. Er kann sowohl aus einer Parallelstruktur oder aus einer Reihenstruktur definiert werden. Es können selbstverständlich auch andere geeignete Regler 52 oder Steuereinheiten verwendet werden, die abhängig vom aktuellen Istwert der Tintentemperatur diese entsprechend bis zum Erreichen einer gewünschten Betriebstemperatur/Solltemperatur/Sollwert der Tinte steuern oder regeln.

Ein "Fluid" ist eine zusammenfassende Bezeichnung für Flüssigkeiten, Gase und Plasmen. Durch Wärmeleitung kann mittels eines Fluids eine Temperatur übertragen werden. Dabei gibt der Volumenstrom (oder Durchflussrate/Durchflussmenge) an, wie viel Volumen eines Fluids pro Zeitspanne durch einen festgelegten Querschnitt transportiert wird. Durch Verändern der Volumenströme der beiden Temperierfluide kann beim Mischen ein Gemisch mit einer gewünschten, resultierenden Temperatur erhalten werden. Die Volumenströme können durch entsprechend steuerbare Ventile nach Bedarf verändert werden.

In Figur 1 ist eine Temperiervorrichtung 10 nur für die Farbe Gelb (Y) mit seinem Distributionstank 44 (D_{y}) dargestellt. Für die anderen Grundfarben Magenta (M), Cyan (C) und schwarz (K) sind nur stellvertretend der jeweilige Distributionstank 44 (hier D_{M}, D_{C} und D_{K}) mit den zugehörigen Zuführungsleitungen zu den Druckriegeln (mehrere Druckköpfe 42 in einer Reihe pro Farbe) dargestellt. Selbstverständlich können auch mit anderen Grundfarben wie RGB (Rot, Gelb, Blau sowie Schwarz) gedruckt werden. Ebenso können weitere Farben oder andere Flüssigkeiten, wie Funktionsflüssigkeiten mit den Druckköpfen 42 verdruckt werden, wobei jede Tinte eine eigene Betriebstemperatur hat, bei der optimalerweise gedruckt wird. Somit ist für jede dieser Tinten ein eigener Wärmetauscher 26 vorhanden, da sich ansonsten die Tinten vermischen würden.

Auch ist es sehr vorteilhaft, wenn nur ein Mischer 22 pro Tintenfarbe vorhanden ist. Es ist allerdings auch möglich, einen einzigen Mischer 22 für mehrere Wärmetauscher 26 zu verwenden, falls für die Tinten dieselbe Tintentemperatur spezifiziert ist. Für eine genaue Regelung ist es vorteilhaft, wenn nur ein einziger Regelkreis pro Farbe vorhanden ist.

Die Zusammensetzung der Tinten und Druckfarben selber sind für die Erfindung zweitrangig, da im Wesentlichen der Aspekt der spezifizierten Betriebstemperatur der zu druckende Flüssigkeit einzuhalten ist, unabhängig von deren chemische Zusammensetzung, auch wenn die Zusammensetzung auf die spezifizierte Temperatur der zu druckenden Flüssigkeit Einfluss hat.

Wenn die Tinte bereits wärmer sein sollte als das Gemisch, wird die Wärme von der Tinte auf das Gemisch übertragen und die Tintentemperatur sinkt (falls sie zuvor zu hoch war). Auf diese Weise kann die Tintentemperatur auch geregelt werden, indem die Tintentemperatur durch eine höhere Temperatur des Gemischs erhöht wird oder der Tintenstrom Wärme abgibt an das kühlere Gemisch, wenn die Tintentemperatur zu hoch ist. Entsprechend der gemessenen Tintentemperatur wird die Gemischtemperatur stetig so geregelt, damit sich die gewünschte Temperatur der Tinte nach dem Wärmetauscher 26 ergibt.

Die Effektivität des Wärmetauschers 26 ist abhängig von den beiden Eintrittstemperaturen von Tinte und Gemisch, der übertragenen thermischen Leistung, sowie insbesondere von der Strömungsführung beider Fluidströme durch den Wärmetauscher 26, wie z. B. eine Gleichstrom-, eine Gegenstrom-, eine Kreuzstrom oder auch Gegenstromwirbelführung. Wesentlich dabei ist, dass die thermische Wärmeübertragung effektiv und schnell von statten geht. Somit kann die gewünschte und spezifizierte Tintensolltemperatur schnell und ohne große Wärmeverluste erreicht werden.

Um eine bessere Effektivität zu erreichen und eine schnellere Solltemperatur der Tinte zu erreichen, kann die Tinte im Tintenvorratsbehälter 28 auf eine Temperatur nahe der Solltemperatur grob vortemperiert werden. Denn wenn ein großer Temperaturunterschied zwischen der Tintentemperatur im Tintenvorratsbehälter 28 und der Solltemperatur der Tinte am Tintenaustritt 36 des Wärmetauschers 26 besteht, so benötigt die Regelung auf die Solltemperatur wesentlich länger und ist Energie aufwändiger. Allerdings verliert dann die Regelung an Variationsbereich.

Neben den Materialeigenschaften des Wärmetauschers 26 wird die Wirksamkeit der Wärmeübertragung von der geometrischen Führung der Stoffströme zueinander bestimmt.

Wenn der Wärmetauscher 26 ideal arbeiten würde, so beträgt die Effizienz der Wärmeübertragung 100 %. In diesem idealen Fall ist die Gemischtemperatur am Ausgang des Mischers 22 gleich der Tintentemperatur am Ausgang des Wärmetauschers 26. Dann wäre es gleich, ob man die Gemischtemperatur oder die Tintentemperatur misst und für die Regelung als Regelgröße zurückkoppelt. Ist jedoch die Effizienz der Wärmeübertragung kleiner als 100 % (wie es in der Realität der Fall ist), dann ist es vorteilhafter, die Tintentemperatur nach dem Ausgang des Wärmetauschers 26 (d.h. direkt vor oder in der Druckeinheit 40, wie beispielsweise im Bereich der Druckköpfe 42) zu messen und als Istwert zurückzukoppeln, um einen gewünschten Temperaturwert als Sollwert zu erhalten. Somit wird die Regelung der Tintentemperatur genauer.

Falls hingegen die Gemischtemperatur als Regelgröße verwendet wird, so muss bei kleinerer Effizienz der Wärmeübertragung ein Korrekturfaktor berücksichtigt werden, um diese geringere Effizienz auszugleichen, d.h. die Gemischtemperatur muss dann um diesen Korrekturfaktor höher eingestellt werden, damit sich die gewünschte Tintentemperatur einstellt. Somit kann sowohl die Gemischtemperatur als auch die Tintentemperatur als Regelgröße verwendet werden. Allerdings ist die Genauigkeit der Regelung am größten, wenn die Tintentemperatur möglichst nahe am "Verbrauch" (d.h. nahe beim Ausstoßen von Tintentropfen durch die Druckköpfe 42) gemessen wird. Dann haben auch die Wärmeverluste auf der Tintenleitung zu den Druckköpfen 42 kaum einen Einfluss auf die Genauigkeit. Falls die Tintentemperatur direkt nach dem Wärmetauscher 26 gemessen wird, müssen die Tintenleitungen zum Druckkopf 42 hin relativ kurz sein, damit die Wärmeverluste gering bleiben und der Toleranzbereich der spezifizierten Betriebstemperatur der Tinte eingehalten wird.

Somit hat die Temperiervorrichtung 10 den Vorteil, dass eine Mischung aus zwei auf unterschiedlichen Temperaturen befindlichen Temperierfluide dazu dient, die gewünschte Tintentemperatur einzustellen. Somit kann die Tintentemperatur nie höher werden als die Temperatur des Warmfluids und nie niedriger werden als die Temperatur des Kaltfluids. Wenn die Temperaturen von Warmfluid und Kaltfluid entsprechend nahe bei der maximal und minimal zulässigen Tintentemperatur eingestellt werden, entsteht ein großer Variationsbereich, innerhalb dessen eine Betriebstemperatur der Tinte eingestellt werden kann. Der Wärmetauscher 26 hat den Vorteil, dass der Gemischkreislauf mit dem Tintenkreislauf mit der zu temperierenden Tinte thermisch verbunden ist, aber davon physisch getrennt ist. So kann die Tinte durch das Gemisch nicht verwässert oder verunreinigt werden, wohl aber einfach und gut temperiert werden.

### Bezugszeichenliste

- 10: Temperiervorrichtung
- 12: Warmfluidquelle
- 13: Heizelement
- 14: Kaltfluidquelle
- 15: Kühlelement
- 16: Abfluss
- 17: Fluidvorratsbehälter (warm)
- 18: Fluidleitung
- 19: Fluidvorratsbehälter (kalt)
- 20: Zufluss
- 21: Zuführanschluss
- 22: Mischer
- 24: Temperatursensor
- 26: Wärmetauscher
- 28: Tintenvorratsbehälter
- 29: Rückführleitung
- 30: Gemischeintritt
- 32: Gemischaustritt
- 33: Tintenleitung (vor Wärmetauscher)
- 34: Tinteneintritt
- 36: Tintenaustritt
- 38: Tintenleitung (nach Wärmetauscher)
- 40: Druckeinheit
- 42: Druckkopf
- 44, D_{y}, D_{M}, D_{C}, D_{K}: Distributionstank
- 46: Aufzeichnungsträger
- 50: Mischventil
- 52: Regler
- YMCK: Farben

## Patentansprüche

1. Temperiervorrichtung zum Temperieren von Tinte für einen Tintendrucker, die aufweist:
- eine Warmfluidquelle (12) mit zumindest einem Abfluss (16) und zumindest einem Zufluss (20), wobei an dem Abfluss (16) ein erstes Temperierfluid mit einer warmen Fluidtemperatur bereitgestellt wird,
- eine Kaltfluidquelle (14) mit zumindest einem Abfluss (16) und zumindest einem Zufluss (20), wobei an dem Abfluss (16) ein zweites Temperierfluid mit einer kalten Fluidtemperatur bereitgestellt wird,
- einen Mischer (22) mit zumindest zwei Zuflüssen (20), die über Fluidleitungen (18) mit den Abflüssen (16) der Warmfluidquelle (12) bzw. der Kaltfluidquelle (14) verbunden sind, zumindest eine Steuereinheit (52), die die Durchflussmengen der zugeführten Temperierfluide in einem solchen Verhältnis mischt, dass ein Gemischfluid mit entsprechenden Anteilsmengen aus beiden Temperierfluiden an einem Ausgang (17) des Mischers (22) mit einer resultierenden Gemischtemperatur bereitgestellt wird,
- einen Wärmetauscher (26) mit zwei voneinander getrennten Fluidkreisläufen zum Übertragen von thermischer Energie von dem ersten Fluidkreislauf auf den zweiten Fluidkreislauf, mit
-- einem Gemischeintritt (30) für den ersten Fluidkreislauf, dem das Gemischfluid von dem Mischer (22) zugeführt wird und mit einem Gemischaustritt (32) des ersten Fluidkreislaufs, über den das Gemischfluid an die erste und/oder zweite Warmfluidquelle (12) zurückgeführt wird,
-- einem Tinteneintritt (34) für den zweiten Fluidkreislauf, der mit einem Tintenvorratsbehälter (28) verbunden ist und über den dem Wärmetauscher (26) zu temperierende Tinte zugeführt wird, und mit einem Tintenaustritt (36), der mit mindestens einer Druckeinheit (40) des Tintendruckers verbunden ist, um die temperierte Tinte der Druckeinheit (40) zuzuführen, und mit
-- einer thermisch leitenden Wand, über die thermische Energie von dem einen Fluidkreislauf zum anderen übertragen wird,
- und zumindest einen Temperatursensor (24), der an oder nach dem Tintenaustritt (36) des Wärmetauschers (26) angeordnet ist und elektrisch mit dem Mischer (22) verbunden ist, wobei der Temperatursensor (24) die Temperatur der Tinte misst und den gemessenen Wert als Regelgröße an den Mischer (22) zurückkoppelt, um eine Solltemperatur der Tinte zu regeln.

2. Temperiervorrichtung nach Anspruch 1, **dadurch gekennzeichnet, dass** der Wärmetauscher (26) ein Plattenwärmetauscher ist.

3. Temperiervorrichtung nach Anspruch 1, **dadurch gekennzeichnet, dass** die Warmfluidquelle (12) und die Kaltfluidquelle (14) jeweils einen Wärmeerzeuger (13) und/oder ein Kühlelement (15) aufweisen, durch die die Temperierfluide auf jeweils vorbestimmte Fluidtemperaturen temperiert werden.

4. Temperiervorrichtung nach Anspruch 1, **dadurch gekennzeichnet, dass** die Temperierfluide Wasser mit gegebenenfalls hinzugefügten Additiven sind.

5. Temperiervorrichtung nach Anspruch 4, **dadurch gekennzeichnet, dass** eine oder beide Fluidquellen (12, 14) aus einer oder mehreren Wasserleitungen gespeist werden mit jeweils einer Fluidtemperatur, die den Wassertemperaturen der Wasserleitungen entsprechen.

6. Temperiervorrichtung nach einem der vorhergehenden Ansprüche, **dadurch gekennzeichnet, dass** die beiden Fluidquellen (12, 14) jeweils ein oder mehrere Temperatursensoren (24) aufweisen zum Messen der jeweiligen Fluidtemperaturen, wobei die Temperatursensoren (24) elektrisch mit dem Mischer (22) verbunden sind, um die gemessenen Temperaturwerte an den Mischer (22) zu senden.

7. Temperiervorrichtung nach einem der vorhergehenden Ansprüche, **dadurch gekennzeichnet, dass** zumindest ein Temperatursensor (24) am Tintenaustritt (36) des Wärmetauschers (26) oder in der Druckeinheit (40) angeordnet ist, der die Temperatur der Tinte misst.

8. Temperiervorrichtung nach einem der vorhergehenden Ansprüche, bei dem die beiden Fluidquellen (12, 14) jeweils ein oder mehrere Heizelemente (13) oder Kühlelemente (15) aufweist, um die warme Fluidtemperatur kleiner/gleich der maximal zulässigen Tintentemperatur einzustellen und die kalte Fluidtemperatur so niedrig einzustellen, dass die vorbestimmte Gemischtemperatur etwa in einem mittleren Bereich zwischen den beiden Fluidtemperaturen liegt, wobei die warme Fluidtemperatur vorzugsweise bei etwa 40° C liegt und die kalte Fluidtemperatur bei etwa 20° C liegt, wenn die Tintentemperatur gemäß einem spezifizierten Betriebstemperaturwert bei etwa 32° C liegt.

9. Temperiervorrichtung nach einem der vorhergehenden Ansprüche, **dadurch gekennzeichnet, dass** die Steuereinheit (52) des Mischers (22) ein PI-Regler ist, dem ein Mischventil (50) vorgeschaltet ist, um die jeweilige Zuflussmenge der beiden Temperierfluide derart zu steuern, dass das Gemischfluid die gewünschte Gemischtemperatur einnimmt.

10. Verfahren zum Temperieren von Tinte für einen Tintendrucker mit einer Temperiervorrichtung nach Anspruch 1, **gekennzeichnet durch**
- Bereitstellen eines warmen und eines kalten Temperierfluids,
- Zuführen der beiden Temperierfluide zu einem Mischer (22),
- Regeln der Temperatur eines Gemischfluids in dem Mischer (22), das aus entsprechenden Anteilen der beiden Temperierfluide abhängig von deren Fluidtemperaturen gemischt wird, um abhängig von einer gemessenen Tintentemperatur eine gewünschte Gemischtemperatur am Ausgang des Mischers (22) zu erhalten,
- thermisches Inkontaktbringen des Gemischfluids mit der Tinte, wobei das Übertragen von thermischer Energie von dem Gemischfluid auf die zu druckende Tinte in einem Wärmetauscher (26) vorgenommen wird, um die Tinte auf die gewünschte Solltemperatur zu bringen,
- Messen der Tintentemperatur nach dem Ausgang des Wärmetauschers (26) und Rückkoppeln des gemessenen Wertes zu dem Mischer (22) zum Regeln der Tintentemperatur, und
- kontinuierliches Regeln der Temperatur der Tinte, bis die Solltemperatur der Tinte erreicht ist und danach weitgehend gehalten wird.
